# EUROPEAN PATENT SPECIFICATION

(11) **EP 2 736 138 B1**
(45) Date of publication and mention of the grant of the patent: **21.02.2018**
(21) Application number: 13005426.5
(22) Date of filing: 19.11.2013
(51) Int. Cl.: H02G 3/12

(54) **Box for installing and wiring electrical devices**
Dose zur Installation und Verdrahtung eines elektrischen Geräts
Boitier pour installer et cabler des appareils électriques

(30) Priority: 21.11.2012 IT MI20121981
(43) Date of publication of application: 28.05.2014
(73) Proprietor: GEWISS S.p.A., 24069 Cenate Sotto (Bergamo) (IT)
(72) Inventor: Bosatelli, Domenico, 24069 Cenate Sotto (Bergamo) (IT)
(74) Representative: Forattini, Amelia

(56) References cited:
- DE-A1- 2 936 963
- DE-U- 1 876 074
- DE-U1-202004 018 083
- GB-A- 2 441 139
- US-A- 3 633 782
- US-A1- 2011 067 320
- US-B1- 6 951 983
- US-B1- 7 045 713

## Description

The present invention relates to a box for installing and wiring electrical devices, studied particularly to be embedded, especially in hollow walls.

As is known, the increasing needs for flexibility, low cost and speed of execution are causing the progressive increase of buildings that use walls of the light type, for example made of plasterboard, instead of walls of the traditional type.

Light walls in fact allow to intervene subsequently simply and cheaply by modifying the internal configuration of the rooms as a function of the changed requirements of their users.

As is known, there are various types of junction box, dedicated specifically to such type of wall.

This distinction is in fact necessary due to two factors.

The first one is related to resistance to abnormal heat and to fire, which causes the need to use different materials with respect to those used in boxes of the traditional type.

Such feature is due to the presence of an air duct that is constituted by the interspace between the two panels, which entails a higher risk with respect to possible ignition of the materials themselves.

The second factor that entails the need to use dedicated boxes is linked to the different installation manner with respect to boxes used in walls of the traditional type.

A wall of the light type in fact has a very low thickness and, once it has been perforated to make room for the box, allows a limited fixing region included between the outer and inner faces of the wall.

In practice, at least three types of fixing systems are used.

In a first type of installation, the panel is perforated in the position in which one wishes to install the box and the shape of the hole matches the dimensions of the box to be installed. Accordingly, the tubes intended to accommodate the wires, necessary for the power supply of the devices installed therein, are extracted from the interspace of the wall and arranged within the box, through the adapted openings provided in the rear of the box.

The box is then inserted in the hole starting from the front of the wall. Once the tubes have been positioned, the box is fixed by virtue of screws that are applied again by acting from the outer side of the wall.

This system is used predominantly with component boxes, where the construction of the box and the limited quantity of tubes, from one to three tubes, allow easy installation thereof.

A second type of installation differs from the first one in that the box is mounted on the posts, generally made of metal, that are needed to support the wall. In particular, a cross-member, generally constituted by material that is present in the building site for other purposes, is used and the box is rested thereon often in an unstable position that causes fixing to be rather complicated. The fixing screws are then fixed directly to the posts, which are easy to identify. The mounting of the box is performed before applying the front part of the wall.

A third installation system is normally used when one wishes to renovate an existing building by adding a wall of the light type that is rested against a traditional wall. This type of installation is used for example both to ensure better thermal and acoustic insulation and to provide walls having a particular shape in order to give particular architectural characteristics to the room. This third installation system is performed in a manner that is substantially similar to the preceding case, i.e., by using the supporting frames of the light walls.

However, differently from the preceding case, the rear wall is no longer constituted by lightweight material but is a wall of the traditional type.

Therefore, the box is fixed to the traditional wall by virtue of systems suitable for the purpose, such as for example expansion plugs.

In such third type of installation the problem arises of making sure that the box that rests against the rear wall is not excessively recessed and therefore protrudes enough to ensure perfect planarity of the wall.

In order to obviate this drawback, installation workers use waste material, such as pieces of cardboard and/or wood, which are rested against the rear of the box so as to form an additional thickness that allows to bring the outer surface of the box to a position that is suitable with respect to the outer surface of the wall.

Commercially available junction boxes, however, are generally unable to satisfy in a flexible manner all of the three installation systems described above.

Some boxes of the conventional type are provided with lateral wings or claws that allow easy fixing in the first case, i.e., when mounting occurs in the presence of the previously perforated front panel; however, placement of the tubes inside the box is very difficult.

The claws in fact are arranged in the interspace located between the rear wall and the front wall, resting on the inner side of the latter so as to prevent extraction of the box.

When the front panel is missing, as in the second and third installation systems, the box can be used, but with great difficulty, since the claw resting surface is not provided.

Other boxes are known which are provided with slots that allow, if one uses the third installation system, to fix the box to the wall.

DE202004018083 discloses an electrical box having flange members for fastening the box to a surface. The box is suitable for insertion in a matching hole in a wall and is enclosed at the opening by a fire-inhibiting, especially non-flammable insulating material that is arranged between the hole soffit and box casing in the fitted position.

DE1876074 discloses an electrical box provided with flange members cooperating with a front plate for fixing the box to a thin wall.

US7045713 discloses a combination of electrical box and bushing wherein the box is mounted on the wall by means of slide members having a peripheral flange.

US2011067320 discloses an in-wall component to be installed in a partition by attaching the wall component to a bracket mounted to a hole in the partition. The component is slightly recessed from the front of the partition to create a slight recess between the front of the partition and the front of the component. A component leveler could then be attached to the bracket to cover the in-wall component, providing a mount that is substantially flush to the wall. The component leveler has several adjustment mechanisms that operate independently of one another to adjust an angular depth of the component leveler to ensure that the edges of the component leveler are perfectly flush with the front of the partition.

US6951983 discloses an outlet box assembly that simplifies the installation of an electrical box to a block wall. The assembly includes a box and a base plate. The box includes side arms projecting from the sidewalls in a plane parallel to the planar front. The side arms include one or more apertures for receipt of fasteners. The base plate is substantially larger in area than the sidewalls of the box and includes an opening therein sized to accept the sidewalls of the box. The box is secured to a block wall by creating a hole in the wall at the desired location, positioning the base plate over the hole and against the wall, placing the box through the opening in the base plate until the back surface of the arms are flush with the base plate, and driving fasteners through one or more of the apertures in the side arms, through the base plate, and into the cement block.

The aim of the present invention is to provide a box for installing and wiring electrical devices that overcomes the drawbacks of the cited prior art.

Within the scope of this aim, an object of the invention is to provide a box that is particularly advantageous in the case of embedded installation, especially in hollow walls.

Another object of the invention is to provide a box that can be fixed easily to a hollow wall, by working from the front, after providing an opening adapted to accommodate it.

Another object is to provide a box that can be fitted easily on supporting cross-members attached to the supporting structure of a light wall, before the front face of the light wall is applied to the posts of the wall.

A further object of the present invention is to provide a box that can be installed easily on a wall of the traditional type, before the front panel of a light wall is applied.

Another object of the present invention is to provide a structure which, by virtue of its particular constructive characteristics, is capable of giving the greatest assurances of reliability and safety in use.

A further object of the present invention is to provide a structure that can be provided easily by using commonly commercially available elements and materials and is furthermore competitive from an economic standpoint.

This aim and these and other objects that will become better apparent hereinafter are achieved by a box for installing and wiring electrical devices, including a box-like body, which is open at the front and is constituted by a rear wall and by side walls that are mutually blended and are adapted to form a receptacle that is open at the front; the side walls including an outer edge that is formed on the front free edge of the side walls; the box-like body being adapted to be embedded in a hollow wall constituted by at least one panel provided with an opening; the box being characterized in that it includes fixing means constituted by discrete members associated with the outer edge and adapted to abut against a surface of a member of the wall at the opening.

Further characteristics and advantages will become better apparent from the description of preferred but not exclusive embodiments of the invention, illustrated by way of non-limiting example in the accompanying drawings, wherein:

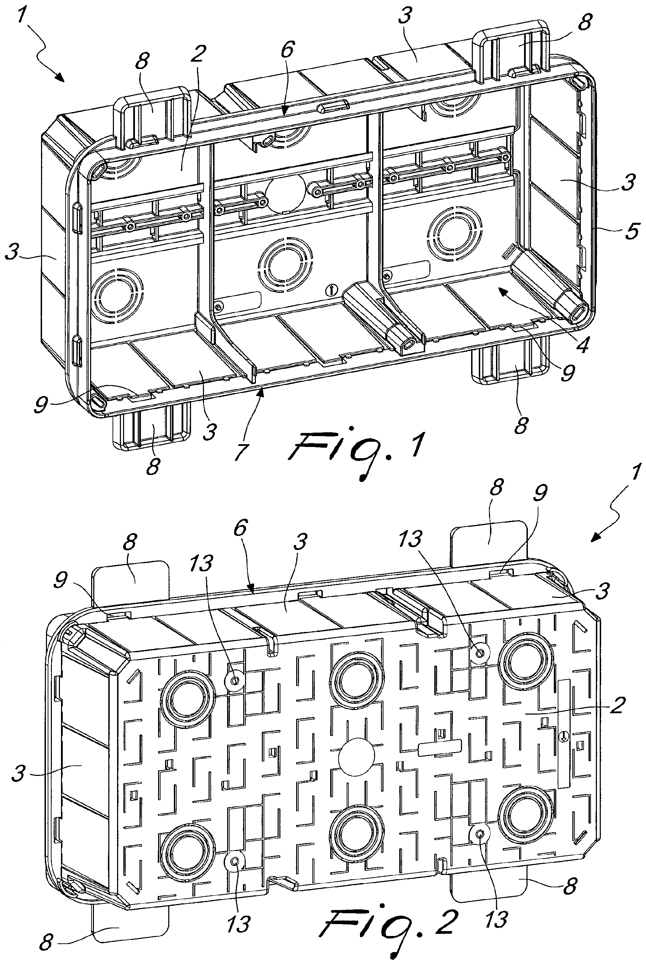

Figure 1 is a front perspective view of the junction box according to the present invention;
Figure 2 is a perspective view of the rear side of the box of the preceding figure;
Figure 3 is a schematic perspective view of the installation of the box on the fixed panel of a plasterboard wall;
Figure 4 is a longitudinally sectional partial lateral elevation view of the installation of the box as in the preceding figure;
Figure 5 is a schematic perspective view of the installation of the box on the frame of a plasterboard wall;
Figure 6 is a longitudinally sectional partial lateral elevation view of the installation of the box as in the preceding figure;
Figure 7 is a schematic perspective view of the installation of the box on the frame of a plasterboard wall, with a rear wall made of masonry;
Figure 8 is a longitudinally sectional partial lateral elevation view of the installation of the box on the rear wall made of masonry.

With reference to the cited figures, the box for installing and wiring electrical devices, according to the invention, generally designated by the reference numeral 1, includes a box-like body that is open at the front and is constituted by a rear wall 2 and by side walls 3 that are mutually blended.

In the specific case, the rear wall 2 is quadrangular and the side walls 3 are blended with the rear wall 2 so as to form a substantially prism-like body, which forms a receptacle 4 that is open toward the front part of the box and is delimited by an outer edge 5, which in turn is formed on the free edge of the side walls 3.

According to the present invention, the box 1 has an abutment means constituted by discrete members associated with the outer edge 5.

Advantageously, the discrete members are constituted by a plurality of wings 8 which are associated with the outer edge 5 and are extended substantially at right angles to the outer edge 5.

The wings 8 are preferably retracted with respect to the front plane of the box formed by the outer edge 5.

In the illustrated example, the box has four wings 8, two wings arranged on the upper side 6 of the outer edge 5 and two wings arranged on the lower side 7 of the outer edge 5.

The front surfaces of the wings 8 form a plane that is parallel and retracted with respect to the front plane formed by the outer edge 5.

An indicator member 9 is formed on the outer edge 5 at each wing 8 in order to allow to identify the position of the wing 8 during the mounting of the box.

The indicator member 9 can be formed by a protrusion, a hollow or other member that is provided easily monolithically with the box.

The box 1 also has abutments 51 that are adapted to cut into a panel 10 and guide the execution of the cut to provide an opening in the panel 10.

On the rear 2 of the box 1 there are seats or slots 13 adapted to accommodate expansion plugs 14 for fixing the box to a wall.

The installation of the box 1 according to the present invention can be performed in various manners according to the requirements.

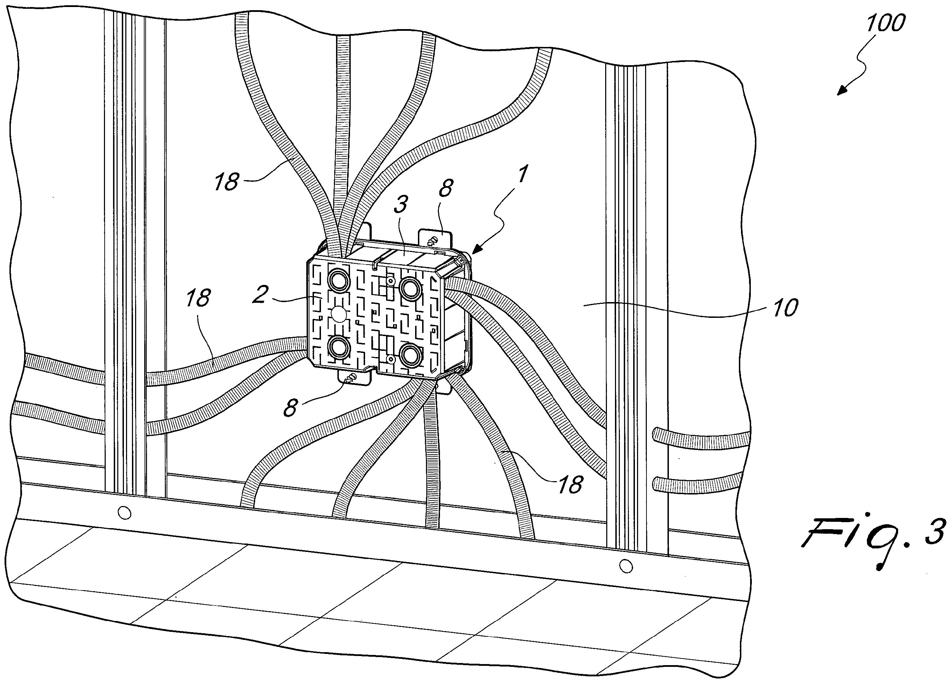

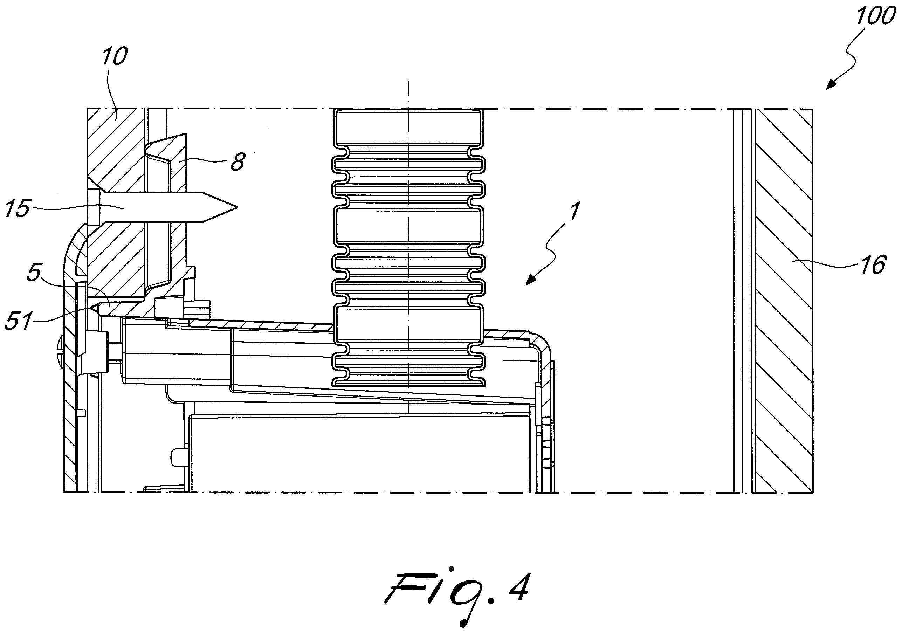

Figures 3 and 4 illustrate the installation of the box on the rear side of a plasterboard wall.

The box 1 is mounted on the rear side of a fixed panel 10 of a plasterboard wall 100 at an opening provided for this purpose in the panel 10.

In order to facilitate the opening of the box receptacle, the abutments 51 provided on the outer edge 5 of the box 1, which are adapted to score the panel 10 and guide the execution of the cut to provide the opening of the box receptacle, are used.

Once the box 1 has been rested within the panel 10, at the opening, it is fixed permanently by virtue of screws 15 suitable for use on plasterboard.

Installation is then completed by applying the movable panel 16 of the plasterboard wall 100.

Advantageously, as can be seen in the sectional view of Figure 4, the wing 8 is spaced from the outer edge 5 of the box 1 so that the outer edge 5 does not protrude with respect to the outer surface of the fixed panel 10.

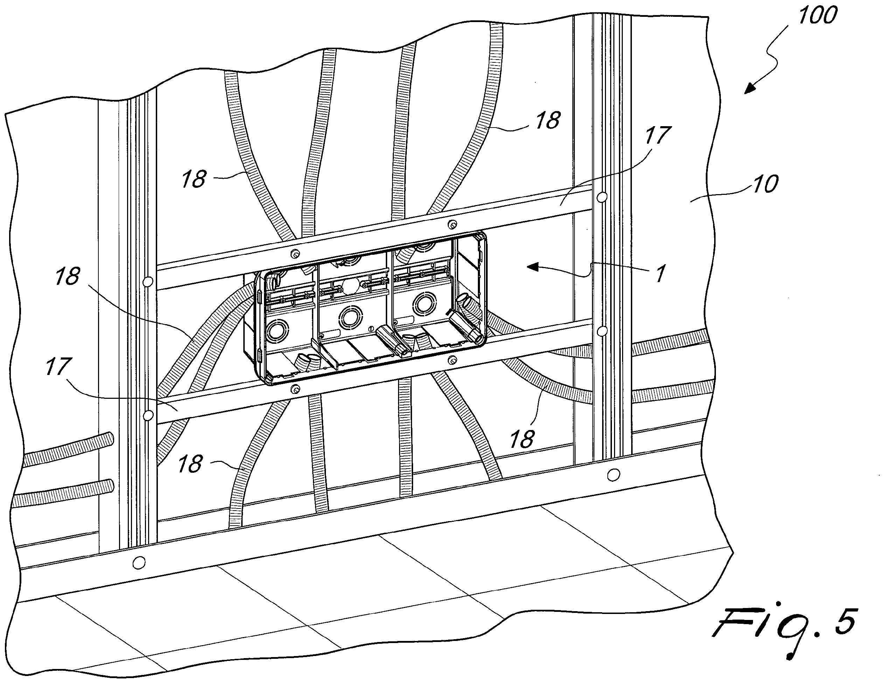

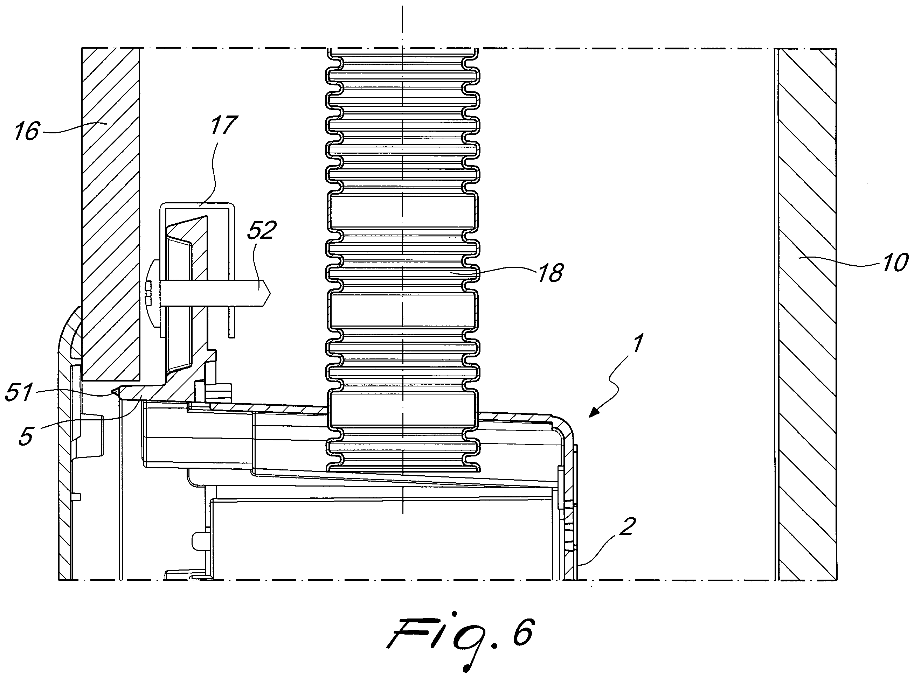

Figures 5 and 6 illustrate the installation of the box 1 in the frame of a wall 100 with a fixed panel 10 made of plasterboard.

The box 1 is rested against the cross-members 17 of the frame of the wall by using the rear flat region of the wings 8 and by fixing the box by virtue of self-tapping screws 52.

The tubes 18 are then positioned within the box 1 and finally the movable panel 16 is fitted.

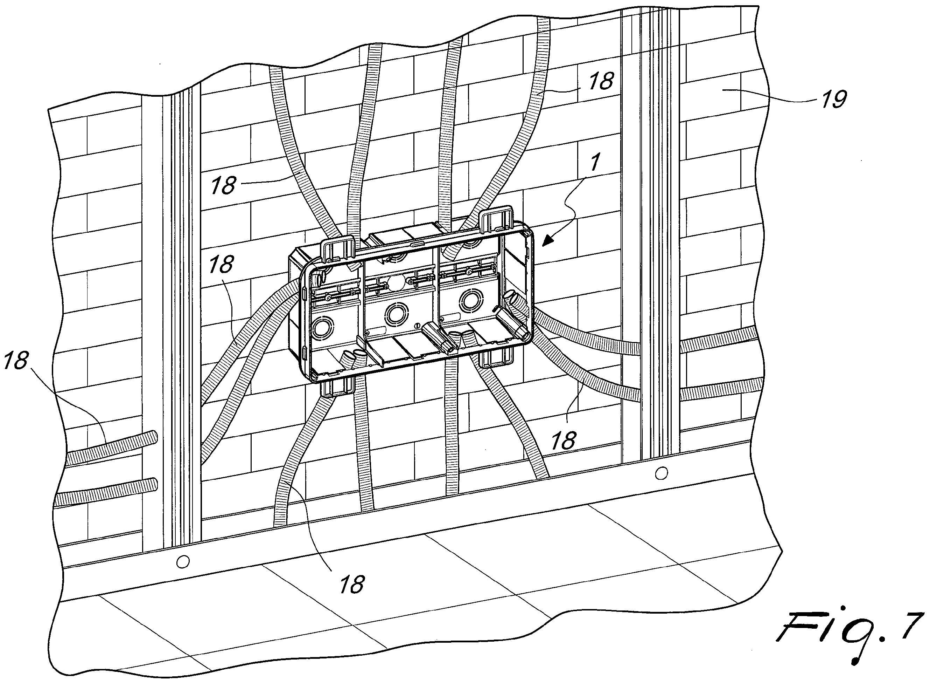

Figure 7 illustrates a similar mounting system, where however the fixed part of the wall is constituted by a masonry wall 19 while the plasterboard movable panel is not visible because it is not installed yet.

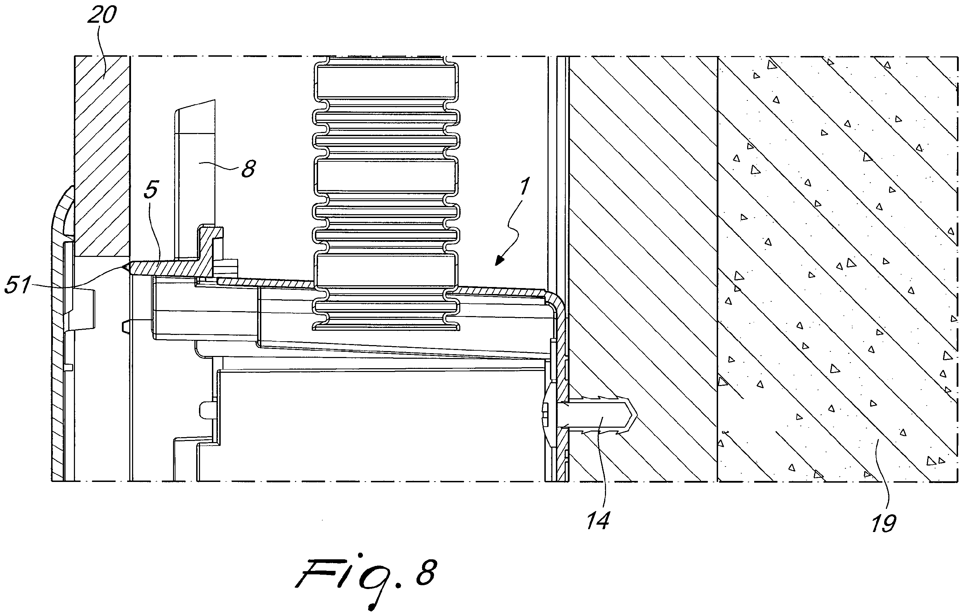

Figure 8 illustrates the installation of the box 1 in a wall constituted by a fixed masonry wall 19 and by a movable panel 20, in which the box 1 is fixed directly to the masonry wall 19, with the optional interposition of a shim, by virtue of expansion plugs 14 that engage the seats or slots 13 provided in the bottom 2 of the box 1.

In practice it has been found that the invention achieves the intended aim and objects, providing a box for installing and wiring electrical devices studied particularly to be embedded in hollow walls, that is provided with wings for the abutment and fixing of the box to the internal surface of the outer panel of the wall or to the frame of the wall.

The abutment wings of the present invention allow easier and faster installation of the box than boxes known up to now for use in hollow walls.

The materials used, as well as the dimensions, may of course be any according to the requirements and the state of the art.

## Claims

1. A box for installing and wiring electrical devices, comprising a box-like body which is open at the front and is constituted by a rear wall **(2)** and by side walls **(3)** that are mutually blended and are adapted to form a receptacle **(4)** that is open at the front; said side walls **(3)** comprising an outer edge **(5)** that is formed on the front free edge of said side walls **(3);** said box-like body being adapted to be embedded in a hollow wall **(100)** constituted by at least one panel **(10)** provided with an opening; said box **further comprising** fixing means constituted by discrete members **(8)** associated with said outer edge **(5)** and adapted to abut against a surface of a member of said wall at said opening;
said discrete members **being** constituted by a plurality of wings **(8)** associated with said outer edge **(5)** and extended substantially at right angles to said outer edge **(5);**
said wings **(8) having** front surfaces, said front surfaces forming a plane that is parallel and recessed with respect to a front plane defined by said outer edge **(5); said**
box **being characterized in that** it comprises an indicator member **(9)** that is formed on said outer edge **(5),** at each one of said wings **(8),** said indicator member **(9)** allowing to identify the position of said wing **(8)** during the mounting of the box; **said box-like body comprises abutments (51) adapted to score a panel (10) of a wall (100) and to guide the execution of the cut to provide said opening in said panel (10).**

2. The box according to claim **1**, **characterized in that** said indicator member **(9)** is formed by a protrusion, recess or other member provided monolithically with said box-like body.

3. The box according to claim 1, **characterized in that** said rear wall **(2)** comprises seats or slots **(13)** adapted to accommodate expansion plugs in order to allow the fixing **of the** box to a wall **(19).**

## Patentansprüche

1. Eine Dose zum Installieren und Verdrahten elektrischer Vorrichtungen, die einen kastenartigen Körper umfasst, welcher vorne offen ist und aus einer Rückwand (2) und aus Seitenwänden (3) besteht, die ineinander übergehen und ausgebildet sind, um einen Behälter (4) zu bilden, der nach vorne hin offen ist, wobei die Seitenwände (3) eine Außenkante (5) umfassen, welche an der vorderen freien Kante der Seitenwände (3) geformt ist; wobei der kastenartige Körper ausgebildet ist, um in eine hohle Wand (100) eingebettet zu werden, die aus mindestens einer Platte (10) besteht, die mit einer Öffnung versehen ist; wobei die Dose weiter Befestigungsmittel umfasst, bestehend aus separaten Gliedern (8), die mit der Außenkante (5) verbunden und ausgebildet sind, um an eine Oberfläche eines Gliedes der Wand an der Öffnung anzustoßen;
wobei die separaten Glieder aus einer Vielzahl von Flügeln (8) bestehen, die mit der Außenkante (5) verbunden sind und sich im Wesentlichen in rechten Winkeln zu der Außenkante (5) erstrecken;
wobei die Flügel (8) Vorderflächen haben, wobei die Vorderflächen eine Ebene bilden, die parallel zu einer Vorderebene, die durch die Außenkante (5) bestimmt wird, und im Verhältnis zu ihr nach hinten versetzt ist;
wobei die Dose **dadurch gekennzeichnet ist, dass** sie ein Indikatorglied (9) umfasst, das an der Außenkante (5) geformt ist, wobei es das Indikatorglied (9) an jedem der Flügel (8) ermöglicht, die Position des Flügels (8) während der Montage der Dose zu bestimmen; der kastenartige Körper umfasst Widerlager (51), die ausgebildet sind, um eine Platte (10) einer Wand (100) einzukerben und die Durchführung des Schnitts zu führen, um die Öffnung in der Platte (10) anzubringen.

2. Die Dose gemäß Anspruch 1, **dadurch gekennzeichnet, dass** das Indikatorglied (9) von einem Vorsprung, einer Vertiefung oder einem anderen Glied gebildet wird, das monolithisch mit dem kastenartigen Körper geformt ist.

3. Die Dose gemäß Anspruch 1, **dadurch gekennzeichnet, dass** die Rückwand (2) Sitze oder Schlitze (13) umfasst, die ausgebildet sind, um Ausdehnungszapfen aufzunehmen, um die Befestigung der Dose an einer Wand (19) zu ermöglichen.

## Revendications

1. Boîtier d'installation et de câblage de dispositifs électriques, comprenant un corps en forme de boîtier qui est ouvert à l'avant et est constitué par une paroi arrière (2) et par des parois latérales (3) qui se fondent mutuellement et sont aptes à former un réceptacle (4) qui est ouvert à l'avant (3), lesdites parois latérales (3) comprenant un bord extérieur (5) qui est formé sur le bord avant libre desdites parois latérales (3); ledit corps en forme de boîtier étant apte à être encastré dans une paroi creuse (100) constituée par au moins un panneau (10) pourvu d'une ouverture; ledit boîtier comprenant en outre des moyens de fixation constitués par des éléments distincts (8) associés audit bord extérieur (5) et aptes à buter contre une surface d'un élément de ladite paroi au niveau de ladite ouverture;
lesdits éléments distincts étant constitués par une pluralité d'ailes (8) associées audit bord extérieur (5) et s'étendant sensiblement à angle droit par rapport audit bord extérieur (5), lesdites ailes (8) comportant des surfaces frontales, lesdites surfaces frontales formant un plan qui est parallèle et en retrait par rapport à un plan frontal défini par ledit bord extérieur (5); ledit boîtier étant **caractérisé en ce qu'**il comprend un élément indicateur (9) qui est formé sur ledit bord extérieur (5) au niveau de chacune desdites ailes (8), ledit élément indicateur (9) permettant d'identifier la position de ladite aile (8) pendant le montage du boîtier; ledit corps en forme de boîtier comprenant des butées (51) aptes à délimiter un panneau (10) d'une paroi (100) et à guider l'exécution de la coupe pour pratiquer ladite ouverture dans ledit panneau (10).

2. Boîtier selon la revendication 1, **caractérisé en ce que** ledit élément indicateur (9) est formé par une saillie, un retrait ou un autre élément pourvu monolithiquement avec ledit corps en forme de boîtier.

3. Boîtier selon la revendication 1, **caractérisé en ce que** ladite paroi arrière (2) comprend des sièges ou des fentes (13) aptes à loger des prises en expansion afin de permettre la fixation du boîtier à une paroi (19).
